(19) Europäisches Patentamt
European Patent Office
Office européen des brevets

(11) **EP 3 056 931 A1**

(12) **EUROPEAN PATENT APPLICATION**
published in accordance with Art. 153(4) EPC

(43) Date of publication:
**17.08.2016 Bulletin 2016/33**

(21) Application number: **14852471.3**

(22) Date of filing: **09.10.2014**

(51) Int Cl.:
***G02B 6/028*** $^{(2006.01)}$

(86) International application number:
**PCT/JP2014/077089**

(87) International publication number:
**WO 2015/053369 (16.04.2015 Gazette 2015/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.10.2013 JP 2013214229**
**20.08.2014 JP 2014167990**

(71) Applicant: **Furukawa Electric Co. Ltd.**
**Tokyo 100-8322 (JP)**

(72) Inventors:
• **IMAMURA, Katsunori**
**Tokyo 100-8322 (JP)**

• **SUGIZAKI, Ryuichi**
**Tokyo 100-8322 (JP)**
• **TSURITANI, Takehiro**
**Fujimino-shi**
**Saitama 356-8502 (JP)**
• **IGARASHI, Koji**
**Fujimino-shi**
**Saitama 356-8502 (JP)**

(74) Representative: **Jackson, Martin Peter**
**J A Kemp**
**14 South Square**
**Gray's Inn**
**London WC1R 5JJ (GB)**

(54) **OPTICAL FIBRE, AND OPTICAL TRANSMISSION SYSTEM**

(57)     Provided is an optical fiber including a core portion, and a cladding portion being formed at an outer periphery of the core portion and having a refractive index lower than a maximum refractive index of the core portion.

The core portion has $\alpha$-shaped refractive index profile in which a value of $\alpha$ is equal to or greater than 3 and equal to or smaller than 10, and at least a diameter of the core portion and a relative refractive-index difference of the core portion relative to the cladding portion are set so that a light can be propagated with equal to or greater than 6 propagation modes at a wavelength of a light inputted. Hereby an optical fiber with little intermodal interference and an optical transmission system using the same are provided.

FIG.1

## Description

Field

The present invention relates to an optical fiber and an optical transmission system using the same. Background
As a means of expanding communication capacity tremendously, a transmission method called mode division multiplexing transmission method (MDM) has been reviewed for transmitting signal lights in a plurality of separate propagation modes existing in an optical fiber respectively (see Non-Patent Literature 1). In order to achieve the mode division multiplexing transmission, not only a transmission path (optical fiber or the like) capable of propagating signal lights at a plurality of propagation modes but also an optical multiplexer/demultiplexer multiplexing or demultiplexing the signal lights at the plurality of propagation modes are necessary.
For demodulating a crosstalk, caused during transmission, of signal lights by intermodal interference among propagation modes, a multiple-input-multiple-output (MIMO) processing at a receiving end is an important technology (see Non-Patent Literature 2).

Citation List

Non-Patent Literatures

Non-Patent Literature 1: C.Koebele et al., "40km Transmission of Five Mode Division Multiplexed Data Streams at 100Gb/s with low MIMO-DSP Complexity", ECOC 2011, Th.13.C.3 (2011)
Non-Patent Literature 2: R.Ryf et al., "Mode-Division Multiplexing Over 96 km of Few-Mode Fiber Using Coherent 6x6 MIMO Processing", J. Lightwave Technol. Vol.30,No.4(2012), pp.521-531.

Summary

Technical Problem

However, since load in the MIMO processing for demodulation becomes heavier if the intermodal interference becomes more intense, an optical fiber with fewer intermodal interference is desired to be designed.
The present invention has been made in view of the above and an object of the present invention is to provide an optical fiber with fewer intermodal interference and an optical transmission system using the same. Solution to Problem
In order to solve the above problems and to attain the object, according to an aspect of the present invention, there is provided an optical fiber including a core portion, and a cladding portion being formed at an outer periphery of the core portion and having a refractive index lower than a maximum refractive index of the core portion. The core portion has $\alpha$-shaped refractive index profile in which a value of $\alpha$ is equal to or greater than 3 and equal to or smaller than 10, and at least a diameter of the core portion and a relative refractive-index difference of the core portion relative to the cladding portion are set so that equal to or greater than 6 propagation modes exist at a wavelength of a light inputted.
In the optical fiber according to the present invention, at least the diameter and the relative refractive-index difference of the core portion are set so that equal to or smaller than 10 propagation modes exist at the wavelength.
In the optical fiber according to the present invention, at least the diameter and the relative refractive-index difference of the core portion are set so that 10 propagation modes including an LP21 mode, an LP02 mode, an LP31 mode, and an LP12 mode exist, and an effective refractive index difference between the LP21 mode and the LP02 mode and an effective refractive index difference between the LP31 and the LP12 mode are equal to or greater than $2 \times 10^{-4}$ at the wavelength.
In the optical fiber according to the present invention, the relative refractive-index difference is equal to or greater than 0.5% and equal to or smaller than 2.0%, and the diameter of the core portion is equal to or greater than 11 $\mu$m and equal to or smaller than 26 $\mu$m.
In the optical fiber according to the present invention, the core portion has the $\alpha$-shaped refractive index profile in which the value of $\alpha$ is equal to or greater than 5.
In the optical fiber according to the present invention, at least the diameter and the relative refractive-index difference of the core portion are set so that 10 propagation modes including an LP21 mode, an LP02 mode, an LP31 mode, and an LP12 mode exist, and an effective refractive index difference between the LP21 mode and the LP02 mode and an effective refractive index difference between the LP31 and the LP12 mode are equal to or greater than $4 \times 10^{-4}$ at the wavelength.
According to another aspect of the present invention, there is provided an optical transmission system including the optical fiber of any one of aspects of the present invention.

Advantageous Effects of Invention

The present invention obtains an effect capable of achieving an optical fiber with fewer intermodal interference and an optical transmission system using the same.

Brief Description of Drawings

FIG. 1 is a view showing a schematic cross section and a refractive index distribution profile of an optical fiber according to Embodiment 1.
FIG. 2 is a view showing an example of field distribution of propagation modes of an optical fiber.
FIG. 3 is a view showing a schematic cross section and a step-shaped refractive index distribution profile of an optical fiber as Comparison Example 1.
FIG. 4 is a view showing an effective refractive index of each propagation mode.
FIG. 5 is a view showing an intermodal effective refractive index difference in a combination of adjacent ones of the propagation modes.
FIG. 6 is a view showing a relationship between a core diameter and an effective refractive index difference between LP21 and LP02.
FIG. 7 is a view showing a relationship between a core diameter and an effective refractive index difference between LP31 and LP12.
FIG. 8 is a view showing a relationship between a core diameter and an effective refractive index difference between LP21 and LP02 in a case where the number of propagation mode is 10.
FIG. 9 is a view showing a relationship between a core diameter and an effective refractive index difference between LP31 and LP12 in a case where the number of propagation mode is 10.
FIG. 10 is a view showing an approximated refractive index distribution profile of a produced optical fiber;
FIG. 11 is a view showing a transmission loss spectrum of a produced optical fiber.
FIG. 12 is a view showing an effective refractive index of each propagation mode in 12-mode design.
FIG. 13 is a view showing intermode effective refractive index difference in a combination of adjacent ones of the propagation modes in the 12-mode design.
FIG. 14 is a view showing an effective refractive index of each propagation mode in 10-mode design.
FIG. 15 is a view showing an intermodal effective refractive index difference in a combination of adjacent ones of the propagation modes in the 10-mode design.
FIG. 16 is a view showing an effective refractive index of each propagation mode in the 12-mode design.
FIG. 17 is a view showing an intermodal effective refractive index difference in a combination of adjacent ones of the propagation modes in the 12-mode design.
FIG. 18 is a schematic diagram of an optical transmission system according to Embodiment 2.

Description of Embodiments

Hereafter, embodiments of an optical fiber and an optical transmission system according to the present invention will be explained in detail with reference to the drawings. The present invention is not limited to these embodiments. In all the drawings, identical or corresponding elements are given same reference numerals appropriately. Moreover, it should be noted that the drawings show schematic examples. Accordingly, a relationship between respective elements may be different from real values. Among the drawings, there may be parts where the relationships and ratios of the shown sizes are different from one another. Any terms not specifically defined in the description follow definitions and measuring methods of the ITU-T (International Telecommunication Union Standardization Sector) G. 650.1.

(Embodiment 1)

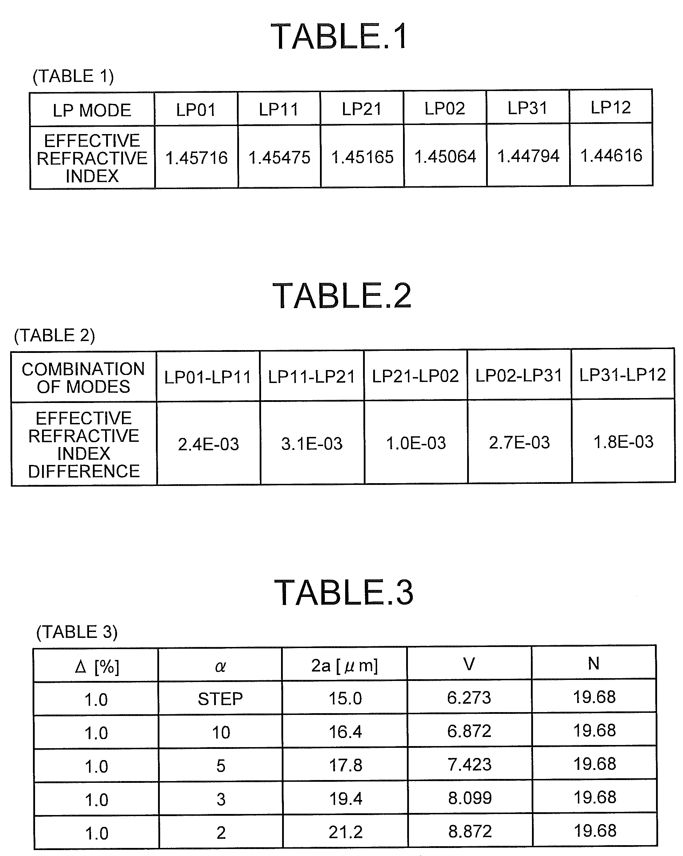

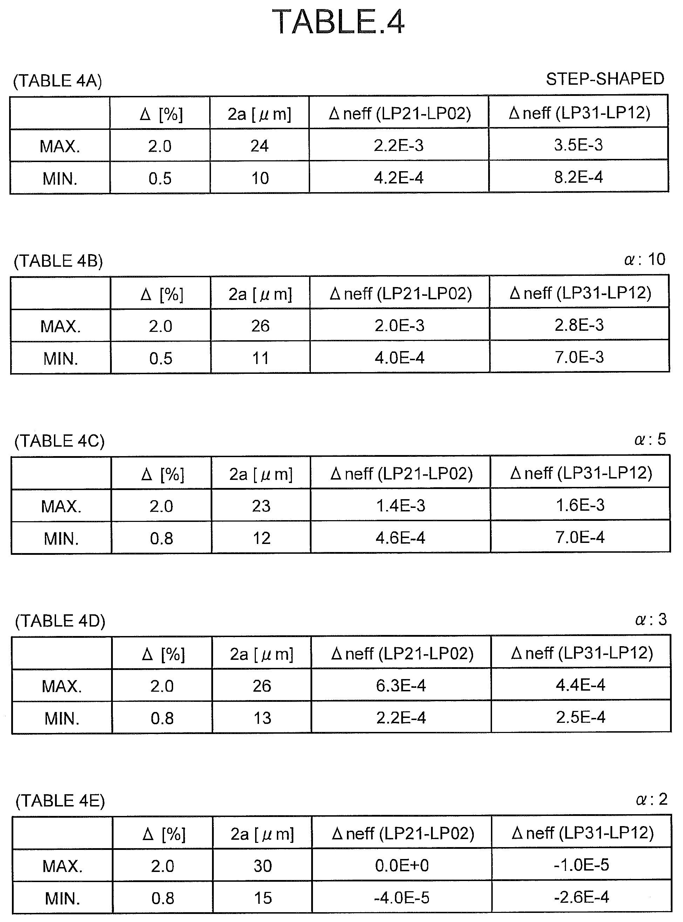

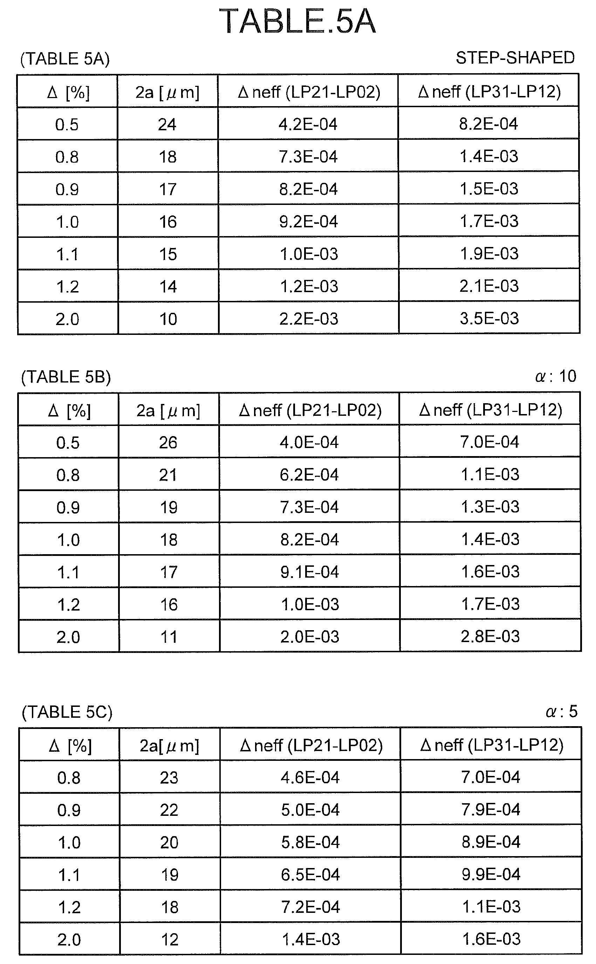

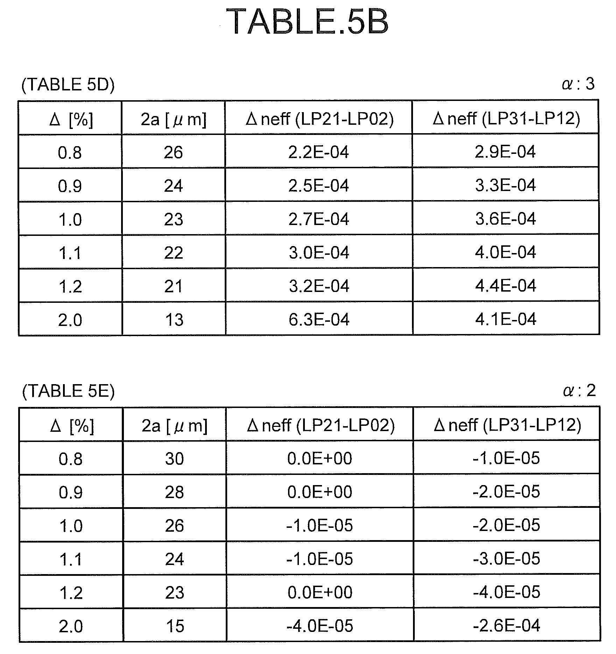

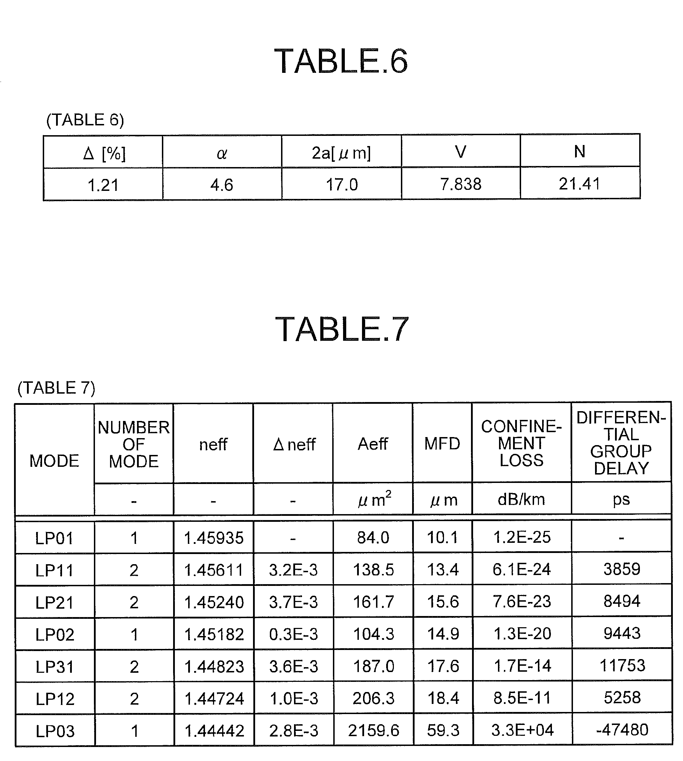

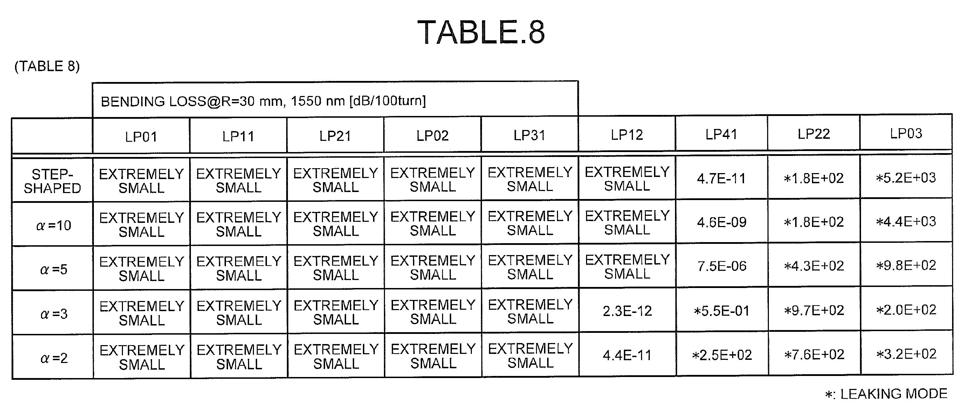

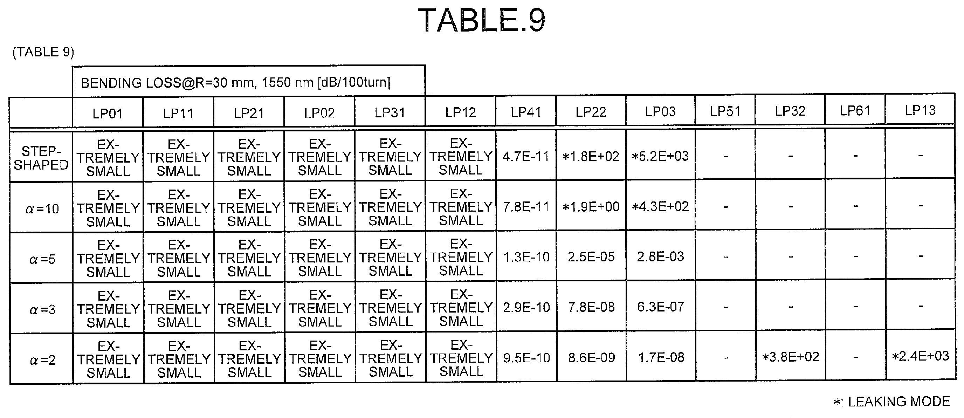

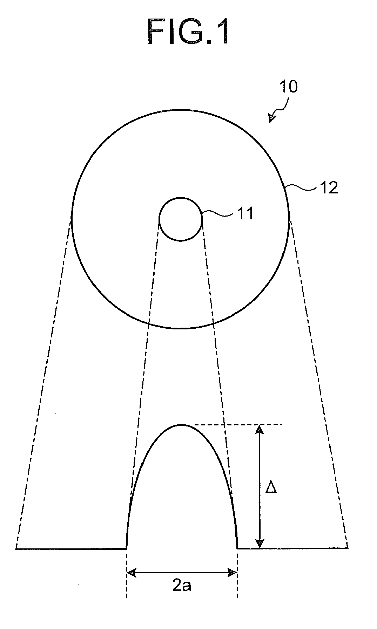

FIG. 1 is a view showing a schematic cross section and a refractive index distribution profile of an optical fiber according to Embodiment 1. As shown in FIG. 1, an optical fiber 10 includes a core portion 11 and a cladding portion 12 formed at an outer periphery of the core portion 11.
The core portion 11 is positioned at an approximate center axis of the optical fiber 10 and has $\alpha$-shaped refractive index profile.
The cladding portion 12 has a refractive index which is lower than the maximum refractive index of the core portion 11.

A mathematical expression (1) below indicates the $\alpha$-shaped refractive index profile of the core portion 11 where a indicates a radius of the core portion 11 (i.e., 2a in diameter), $n_1$ indicates the maximum refractive index, $n_0$ indicates a refractive index of the cladding portion 12, and r indicates a distance from the center of the core portion 11 in a radial direction. For example, a refractive index distribution profile in which a value of $\alpha$ is 3 in the mathematical expression (1) can be called an $\alpha$-shaped refractive index profile in which a value of $\alpha$ is 3. A mathematical expression (2) below indicates a relative refractive index difference $\Delta$ of the core portion 11 relative to the cladding portion 12.

$$n^2(r) = n_1{}^2 - \left(n_1{}^2 - n_0{}^2\right)\left(\frac{r}{a}\right)^\alpha \qquad (1)$$

$$\Delta = \frac{n_1{}^2 - n_0{}^2}{2n_1{}^2} \qquad (2)$$

The core portion 11 is made of silica glass doped with, for example, Ge as a refractive index-increasing dopant. On the other hand, the cladding portion 12 is made of, for example, pure silica glass not containing refractive index-adjusting dopant. A coating may be formed at an outer periphery of the cladding portion 12.

Herein, for the optical fiber 10, at least the diameter (core diameter) 2a of the core portion 11 and the relative refractive index difference $\Delta$ of the core portion 11 relative to the cladding portion 12 are set so that equal to or greater than 6 propagation modes exist. Herein, an existence of propagation mode at a certain wavelength means a state in which an effective refractive index of the core portion 11 at the wavelength of the propagation mode is greater than the refractive index of the cladding portion 12 sufficiently (for example, if the cladding portion 12 is made of pure silica glass, an effective refractive index at wavelength of 1550 nm is equal to or greater than 1.4458), a confinement loss is small, and a light is confined in the core portion 11.

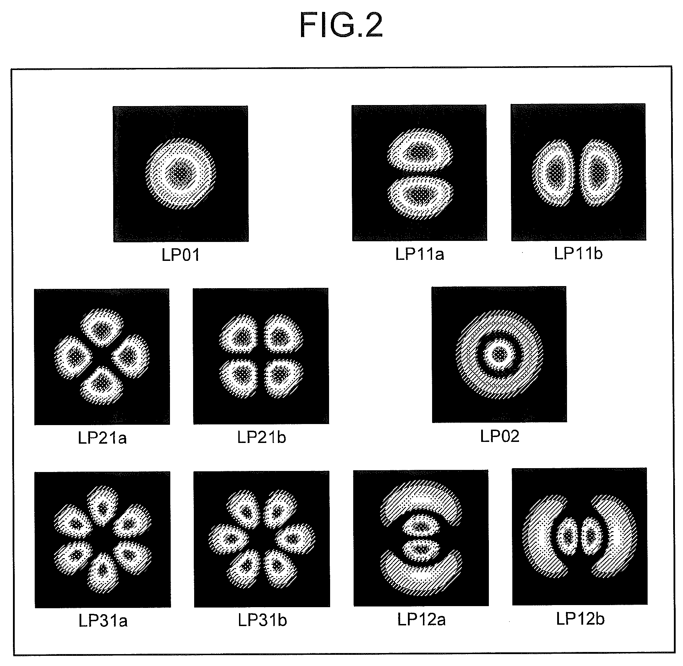

FIG. 2 is a view showing an example of field distribution of propagation modes of an optical fiber. FIG. 2 shows field distributions for, in total, 10 modes: an LP01 mode as a fundamental mode among propagation modes and LP11, LP21, LP02, LP31, and LP12 as higher-order modes. Since each of the modes LP11, LP21, LP31, and LP12 have two degenerated modes respectively, the degenerated modes are indicated separately by, for example, adding "a" and "b" such as LP11a and LP11b. Although each LP mode has further two degenerated polarization modes, herein only LP modes are considered. Therefore, unless otherwise specified in the present specification, a propagation mode does not include a polarization mode in number.

Moreover, in this optical fiber 10, the core portion 11 has $\alpha$-shaped refractive index profile where a value of $\alpha$ is equal to or greater than 3 and equal to or smaller than 10. As a result, since an effective refractive index difference between modes of which orders are adjacent increases sufficiently, an intermodal interference is small. Since, in the optical fiber 10, the core portion 11 has $\alpha$-shaped refractive index profile where a value of $\alpha$ is equal to or greater than 3 and equal to or smaller than 10, an effect is obtained which facilitates production (better productivity) relative to a case of refractive index distribution profile in which a value of $\alpha$ is greater than 10, or step-shaped refractive index distribution profile. Herein "facilitated production" includes two meanings below. Firstly, since the $\alpha$-shaped refractive index profile in which a value of $\alpha$ is equal to or greater than 3 and equal to or smaller than 10 is reproducible better and is easier to be produced than a case of refractive index distribution profile of which $\alpha$-shaped in which a value of $\alpha$ is greater than 10, or a case of step-shaped refractive index distribution profile. It is more difficult to produce a strict step-shape with better reproducibility. Secondly, since the refractive index varies drastically in a radial direction in the $\alpha$-shaped, or a step-shaped, refractive index distribution profile in which a value of $\alpha$ is greater than 10, transmission loss of the core portion tends to increase.

On the other hand, since the refractive index varies in the radial direction more modestly in the $\alpha$-shaped refractive index profile in which a value of $\alpha$ is equal to or greater than 3 and equal to or smaller than 10, lower transmission loss can be expected in the core portion.

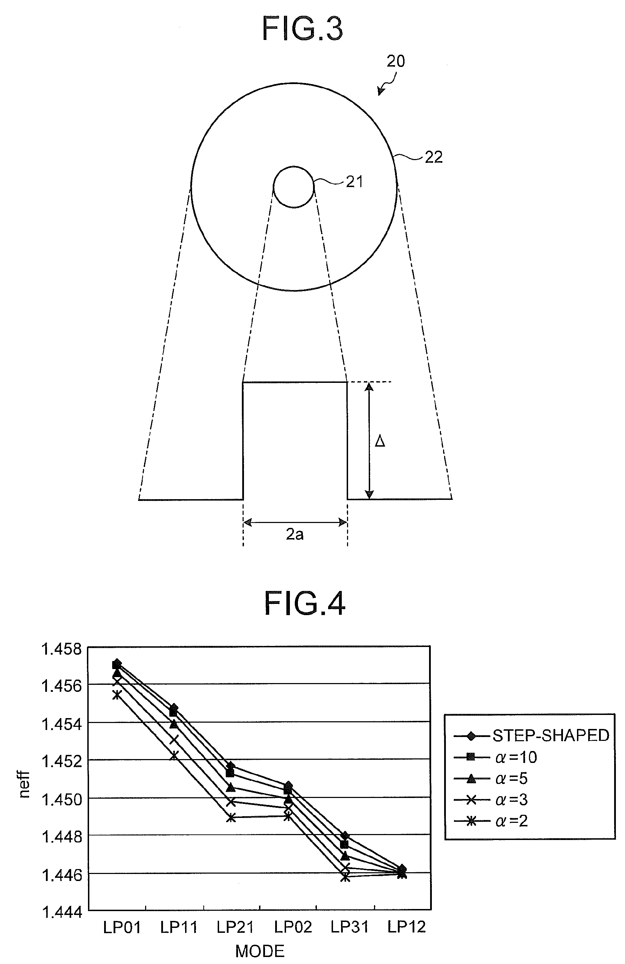

Hereafter, as Example, a case in which the cladding portion 12 is made of pure silica glass (refractive index is approximately 1.444 at wavelength of 1550 nm) will be explained specifically. Hereafter, an optical fiber of which core portion has a step-shaped refractive index distribution profile will be explained also for comparison. FIG. 3 is a view showing a schematic cross section and a step-shaped refractive index distribution profile of an optical fiber as Comparison Example 1. An optical fiber 20 shown in FIG. 3 includes a core portion 21 and a cladding portion 22 formed at an outer periphery of the core portion 21. The core portion 21 is positioned at an approximate center axis of the optical fiber 20 and has a step-shaped refractive index distribution profile. The cladding portion 22 has a refractive index which is lower than the maximum refractive index of the core portion 21.

Herein $\alpha$ being made infinity in the above-described mathematical expression (1) below indicates the $\alpha$-shaped refractive index profile of the core portion 21 by making where a indicates a radius of the core portion 21 (i.e., 2a in diameter), $n_1$ indicates the maximum refractive index, $n_0$ indicates a refractive index of the cladding portion 22, and r indicates a distance from the center of the core portion 21 in a radial direction. A relative refractive index difference $\Delta$ of the core portion 21 in this state relative to the cladding portion 22 is indicated by the above-described mathematical expression (2).

To start with, Table 1 is a table showing effective refractive index of each propagation mode at wavelength of 1550 nm in a case where the relative refractive index difference $\Delta$ is set at 1.0% and the core diameter 2a is set at 15.0 $\mu$m in the optical fiber of the Comparison Example 1. Table 2 is a table showing intermodal effective refractive index difference in combined adjacent modes among the propagation modes shown in Table 1. In Table 2, for example, "LP01-LP11" indicates a difference between an effective refractive index of the LP01 mode as an adjacent mode and an effective refractive index of an LP11 mode. In addition, "E" is a sign indicating power of 10, and for example, 2.4E-03 means $2.4 \times 10^{-3}$.

(TABLE 1)

| LP MODE | LP01 | LP11 | LP21 | LP02 | LP31 | LP12 |
|---|---|---|---|---|---|---|
| EFFECTIVE REFRACTIVE INDEX | 1.45716 | 1.45475 | 1.45165 | 1.45064 | 1.44794 | 1.44616 |

(TABLE 2)

| COMBINATION OF MODES | LP01-LP11 | LP11-LP21 | LP21-LP02 | LP02-LP31 | LP31-LP12 |
|---|---|---|---|---|---|
| EFFECTIVE REFRACTIVE INDEX DIFFERENCE | 2.4E-03 | 3.1E-03 | 1.0E-03 | 2.7E-03 | 1.8E-03 |

The possibility that an intermodal interference may occur in a mode-division-multiplexing-transmission optical fiber is known to depend on the difference of effective refractive index of each mode. For example, the smaller the intermodal effective refractive index difference is, the more easily the intermodal interference may occur between the modes. In a case of the optical fiber of the Comparison Example 1, as shown in Table 2, effective refractive index differences of "LP21-LP02" and "LP31-LP12" are small. Therefore, intermodal interference is likely to occur between these modes.

Subsequently, an effective refractive index of each propagation mode at wavelength of 1550 nm and an intermode effective refractive index difference in a combination of adjacent modes among propagation modes are shown similarly to the optical fiber of the Comparison Example 1 for the optical fiber 10 according to the present embodiment 1 in which values of $\alpha$ are set to 10, 5, and 3 (for Embodiments 1, 2, and 3, respectively) and for the optical fiber, of a Comparison Example 2, which has the $\alpha$-shaped refractive index profile similarly to the optical fiber 10, and in which a value of $\alpha$ is 2. However, there is a case in which the number of existing propagation modes decreases in a case in which the refractive index distribution profile is $\alpha$-shaped and relative refractive index difference and core diameter are set to values that are the same as those for the step-shape. In order to compare with the same number of propagation modes, for Examples 1, 2, and 3, and the Comparison Example 2, a number N of propagation mode indicated by a mathematical expression (4) was calculated by using normalized frequency (V-value) indicated by a mathematical expression (3) below while fixing the relative refractive index difference $\Delta$ at 1.0%, and the core diameter 2a was adjusted so that the number N of propagation mode is equal to number N of propagation mode ($=V^2/2$) calculated for the Comparison Example 1 to calculate the effective refractive index. In the mathematical expression (3), $\lambda$ is wavelength.

$$V = \frac{2\pi a}{\lambda} n_1 \sqrt{2\Delta} \qquad (3)$$

$$N = \frac{\alpha}{\alpha + 2} \frac{V^2}{2} \qquad (4)$$

Table 3 is a table showing the core diameter 2a, V-value, and number N of propagation mode, at wavelength of 1550 nm in a case in which the relative refractive index difference $\Delta$ is set at 1.0% in the optical fiber of the Comparison Example 1 (step-shaped), the optical fibers of the Examples 1, 2, and 3 (a are 10, 5, and 3 respectively), and the optical fiber of the Comparison Example 2 ($\alpha$ is 2). Herein, since the number N of propagation mode is a value corresponding to the number of modes including two polarization modes, the number N of propagation mode is of a value close to 20, i.e., twice as many as an assumed number 10 of propagation mode.

(TABLE 3)

| $\Delta$ [%] | $\alpha$ | 2a [$\mu$ m] | V | N |
|---|---|---|---|---|
| 1.0 | STEP | 15.0 | 6.273 | 19.68 |
| 1.0 | 10 | 16.4 | 6.872 | 19.68 |
| 1.0 | 5 | 17.8 | 7.423 | 19.68 |
| 1.0 | 3 | 19.4 | 8.099 | 19.68 |
| 1.0 | 2 | 21.2 | 8.872 | 19.68 |

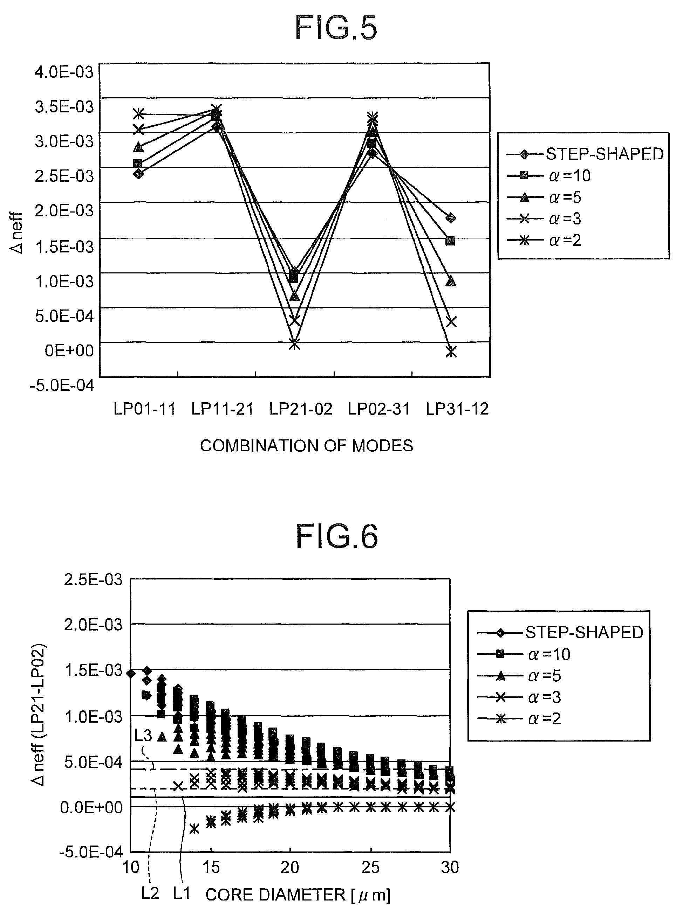

Next, FIG. 4 is a view showing an effective refractive index $n_{eff}$ of each propagation mode. FIG. 5 is a view showing an intermodal effective refractive index difference ($\Delta$neff) in a combination of adjacent ones of the propagation modes. In this calculation, since the effective refractive index of the LP03 mode of which mode is higher in one degree than the LP12 mode was lower than the refractive index of the cladding portion in any one of the Examples and the Comparison Example, it was confirmed that the existing number of propagation modes was 10.

In addition, it was confirmed that the effective refractive index difference decreases along with a decrease in the value of $\alpha$, and thus an intermodal interference is likely to occur. Particularly, in a case in which the value of $\alpha$ of the Comparison Example 2 was 2, the effective refractive index differences of "LP21-LP02" and "LP31-LP12" were negative values, and the order of modes was switched.

Next, for the optical fibers of the Examples 1, 2, and 3, and the Comparison Examples 1 and 2, the relative refractive index differences $\Delta$ and the core diameters 2a were changed, and the effective refractive index and the effective refractive index difference of each propagation mode at wavelength of 1550 nm were calculated. Herein the relative refractive index difference $\Delta$ was changed from 0.8% to 1.2% by 0.1%, the core diameters 2a were changed from 10.0 $\mu$m to 30.0 $\mu$m by 1.0 $\mu$m in the Examples 1, 2, and 3 which are $\alpha$-shaped, and the Comparison Example 2, and changed from 10.0 $\mu$m to 20.0 $\mu$m by 1.0 $\mu$m in the step-shaped Comparison Example 1.

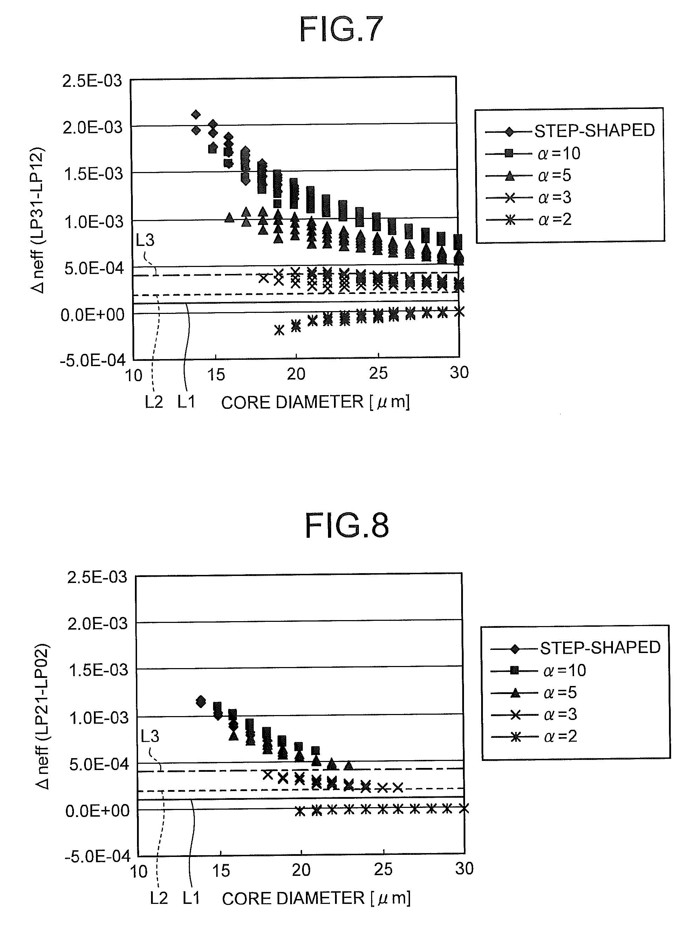

FIG. 6 is a view showing a relationship between a core diameter and an effective refractive index difference ($\Delta$neff (LP21-LP02)) between LP21 and LP02. FIG. 7 is a view showing a relationship between a core diameter and an effective refractive index difference ($\Delta$neff (LP31-LP12)) between LP31 and LP12. A state in which data points are shown in FIG. 6 means that light can be propagated with the LP02 mode that is the 6th mode with reference to a fundamental mode. Therefore, it means that equal to or greater than 6 of propagation modes exist in a case of combination of the core diameter 2a and the relative refractive index difference $\Delta$ of which data points are shown.

Similarly, it means that light can be propagated with the LP12 mode in a state of showing data points in FIG. 7. Therefore, it means that light can be transmitted with equal to or greater than 10 propagation modes in a case of combination of the core diameter 2a and the relative refractive index difference $\Delta$ of which data points are shown.

As shown in FIG. 6, in a case of the Example 3 in which a value of $\alpha$ is 3, the effective refractive index difference between LP21-LP02 becomes greater than $1.0 \times 10^{-4}$ shown by the line L1 or $2.0 \times 10^{-4}$ shown by the line L2 sometimes. In a case of the Examples 1 and 2 in which values of $\alpha$ are 10 and 5, the effective refractive index difference becomes yet greater than $4.0 \times 10^{-4}$ shown by the line L3 sometimes. Thus, it was confirmed to be effective to restrain an intermodal interference in a case in which the propagation mode is equal to or greater than 6.

It is considered that, if the effective refractive index difference between adjacent modes is equal to or greater than $1.0 \times 10^{-4}$, the intermodal interference hardly occur sufficiently. This can be inferred from that, for example, in a case of a polarization-maintaining optical fiber in which polarization axes being orthogonal to each other are formed in a core portion, a difference of effective refractive indices between the orthogonal polarization axes should be set at equal to or greater than $1.0 \times 10^{-5}$ for not making the two polarization modes interfere. In a case in which an outer diameter of a cladding portion of an optical fiber fluctuates in a longitudinal direction, power of propagating light fluctuates sometimes by mode-coupling with a leaky mode. The fluctuation of the optical power decreases drastically when a spatial period of fluctuation of the outer diameter of the cladding portion becomes equal to or shorter than 10 cm. In a case in which the spatial period is coupled with the leaky mode by 10 cm, the effective refractive index difference between the propagation mode and the leaky mode is approximately $1.0 \times 10^{-5}$ at a wavelength range (for example, wavelength of 1550 nm) used for optical communication. That is, if the effective refractive index difference is equal to or greater than $1.0 \times 10^{-5}$, the mode-coupling is restrained to a large degree. From this point, it is considered that the intermodal interference hardly occur sufficiently if the effective refractive index difference between adjacent modes is equal to or greater than $1.0 \times 10^{-4}$.

Similarly, as shown in FIG. 7, in a case of the Example 3 in which a value of $\alpha$ is 3, the effective refractive index difference between LP31-LP12 becomes greater than $1.0 \times 10^{-4}$ shown by the line L1 or $2.0 \times 10^{-4}$ shown by the line L1 sometimes. In a case of the Examples 1 and 2 in which values of $\alpha$ are 10 and 5, the effective refractive index difference becomes yet greater than $4.0 \times 10^{-4}$ shown by the line L3. Thus, it was confirmed to be effective to restrain an intermodal interference in a case in which the propagation mode is equal to or greater than 10.

On the other hand, since, in a case of the Comparison Example 2 in which a value of $\alpha$ is 2, the effective refractive index difference is a negative value and its absolute value is small, it was confirmed that not only the intermodal interference increases but also the order of modes are switched, thus it is not suitable for mode division multiplexing transmission.

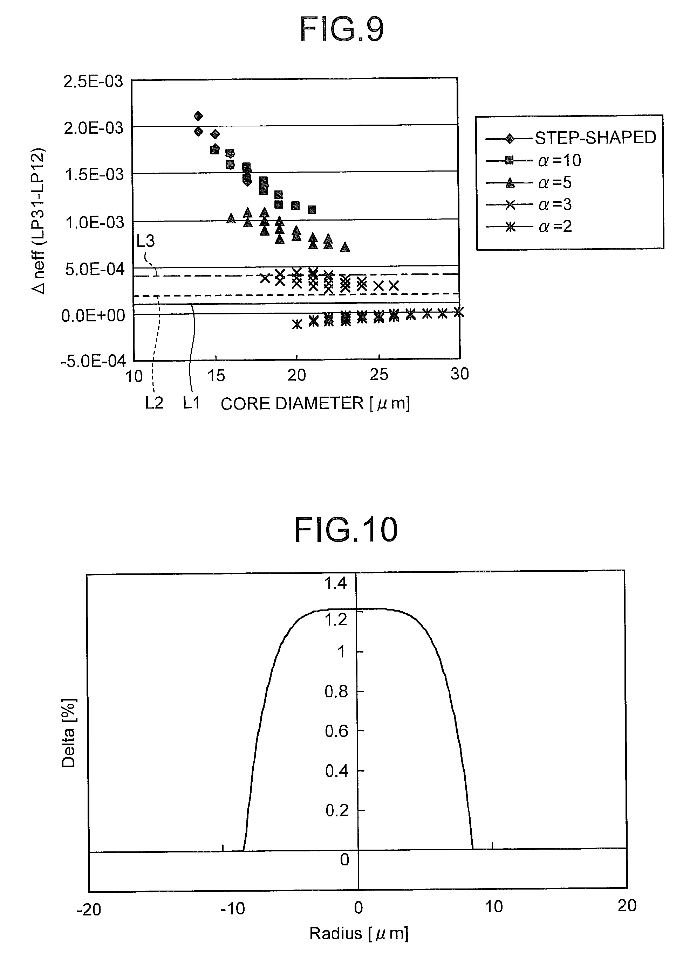

Next, FIG. 8 is a view showing a relationship between a core diameter and an effective refractive index difference ($\Delta$neff (LP21-LP02)) between LP21 and LP02 in a case where the number of propagation mode is 10. That is, FIG. 8 is a view showing data points extracted from the data points shown in FIG. 6 in a case in which the number of propagation modes is 10. FIG. 9 is a view showing a relationship between a core diameter and an effective refractive index difference ($\Delta$neff (LP31-LP12)) between LP31 and LP12 in a case where the number of propagation modes is 10. That is, FIG. 9 is a view showing data points extracted from the data points shown in FIG. 7 in a case in which the number of propagation modes is 10.

Moreover, tables 4A, 4B, 4C, 4D, and 4E are tables showing maximum values and minimum values of relative refractive index differences $\Delta$; and core diameters 2a, $\Delta$neff (LP21-LP02), and $\Delta$neff (LP31-LP12) corresponding to these maximum values and minimum values respectively for respective cases of the Comparison Example 1 (step-shaped), the Example 1 ($\alpha$:10), the Example 2 ($\alpha$:5), the Example 3 ($\alpha$:3), and the Comparison Example 2 ($\alpha$:2) among the data points shown in FIGS. 8 and 9.

(TABLE 4A) STEP-SHAPED

|  | $\Delta$ [%] | 2a [$\mu$ m] | $\Delta$ neff (LP21-LP02) | $\Delta$neff (LP31-LP12) |
|---|---|---|---|---|
| MAX. | 2.0 | 24 | 2.2E-3 | 3.5E-3 |
| MIN. | 0.5 | 10 | 4.2E-4 | 8.2E-4 |

(TABLE 4B) $\alpha$ : 10

|  | $\Delta$ [%] | 2a [$\mu$ m] | $\Delta$ neff (LP21-LP02) | $\Delta$ neff (LP31-LP12) |
|---|---|---|---|---|
| MAX. | 2.0 | 26 | 2.0E-3 | 2.8E-3 |
| MIN. | 0.5 | 11 | 4.0E-4 | 7.0E-3 |

(TABLE 4C) $\alpha$ : 5

|  | $\Delta$ [%] | 2a [$\mu$ m] | $\Delta$ neff (LP21-LP02) | $\Delta$ neff (LP31-LP12) |
|---|---|---|---|---|
| MAX. | 2.0 | 23 | 1.4E-3 | 1.6E-3 |
| MIN. | 0.8 | 12 | 4.6E-4 | 7.0E-4 |

(TABLE 4D) $\alpha$ : 3

|  | $\Delta$ [%] | 2a [$\mu$ m] | $\Delta$ neff (LP21-LP02) | $\Delta$neff (LP31-LP12) |
|---|---|---|---|---|
| MAX. | 2.0 | 26 | 6.3E-4 | 4.4E-4 |
| MIN. | 0.8 | 13 | 2-2E-4 | 2.5E-4 |

(TABLE 4E) $\alpha$ : 2

|  | $\Delta$ [%] | 2a [$\mu$ m] | $\Delta$ neff (LP21-LP02) | $\Delta$ neff (LP31-LP12) |
|---|---|---|---|---|
| MAX. | 2.0 | 30 | 0.0E+0 | -1.0E-5 |

(continued)

| | Δ [%] | 2a [$\mu$m] | Δ neff (LP21-LP02) | Δ neff (LP31-LP12) |
|---|---|---|---|---|
| MIN. | 0.8 | 15 | -4.0E-5 | -2.6E-4 |

As shown in Tables 4B to 4D, if $\alpha$ is equal to or greater than 3 and equal to or smaller than 10, relative refractive index difference Δ is 0.5% to 2.0%, and the core diameter 2a is between 11 $\mu$m and 26 $\mu$m, it is possible to make both Δneff (LP21-LP02) and Δneff (LP31-LP12) equal to or greater than $2.0 \times 10^{-4}$ or equal to or greater than $4.0 \times 10^{-4}$.

Moreover, tables 5A, 5B, 5C, 5D, and 5E are tables showing values of relative refractive index differences Δ between the maximum values and the minimum values, core diameters 2a, Δneff (LP21-LP02), and Δneff (LP31-LP12) corresponding to the relative refractive index differences Δ respectively for respective cases of the Comparison Example 1 (step-shaped), the Example 1 ($\alpha$:10), the Example 3 ($\alpha$:3), and the Comparison Example 2 ($\alpha$:2) among the data points shown in FIGS. 8 and 9. .

(TABLE 5A) STEP-SHAPED

| Δ [%] | 2a [$\mu$m] | Δ neff (LP21-LP02) | Δ neff (LP31-LP12) |
|---|---|---|---|
| 0.5 | 24 | 4.2E-04 | 8.2E-04 |
| 0.8 | 18 | 7.3E-04 | 1.4E-03 |
| 0.9 | 17 | 8.2E-04 | 1.5E-03 |
| 1.0 | 16 | 9.2E-04 | 1.7E-03 |
| 1.1 | 15 | 1.0E-03 | 1.9E-03 |
| 1.2 | 14 | 1.2E-03 | 2.1E-03 |
| 2.0 | 10 | 2.2E-03 | 3.5E-03 |

(TABLE 5B) $\alpha$ : 10

| Δ [%] | 2a [$\mu$m] | Δ neff (LP21-LP02) | Δ neff (LP31-LP12) |
|---|---|---|---|
| 0.5 | 26 | 4.0E-04 | 7.0E-04 |
| 0.8 | 21 | 6.2E-04 | 1.1E-03 |
| 0.9 | 19 | 7.3E-04 | 1.3E-03 |
| 1.0 | 18 | 8.2E-04 | 1.4E-03 |
| 1.1 | 17 | 9.1E-04 | 1.6E-03 |
| 1.2 | 16 | 1.0E-03 | 1.7E-03 |
| 2.0 | 11 | 2.0E-03 | 2.8E-03 |

(TABLE 5C) $\alpha$ - 5

| Δ [%] | 2a[$\mu$m] | Δ neff (LP21-LP02) | Δneff (LP31-LP12) |
|---|---|---|---|
| 0.8 | 23 | 4.6E-04 | 7.0E-04 |
| 0.9 | 22 | 5.0E-04 | 7.9E-04 |
| 1.0 | 20 | 5.8E-04 | 8.9E-04 |
| 1.1 | 19 | 6.5E-04 | 9.9E-04 |
| 1.2 | 18 | 7.2E-04 | 1.1E-03 |
| 2.0 | 12 | 1.4E-03 | 1.6E-03 |

(TABLE 5D) $\alpha$ : 3

| $\Delta$ [%] | 2a [$\mu$m] | $\Delta$ neff (LP21-LP02) | $\Delta$ neff (LP31-LP12) |
|---|---|---|---|
| 0.8 | 26 | 2.2E-04 | 2.9E-04 |
| 0.9 | 24 | 2.5E-04 | 3.3E-04 |
| 1.0 | 23 | 2.7E-04 | 3.6E-04 |
| 1.1 | 22 | 3.0E-04 | 4.0E-04 |
| 1.2 | 21 | 3.2E-04 | 4.4E-04 |
| 2.0 | 13 | 6.3E-04 | 4.1E-04 |

(TABLE 5E) $\alpha$ : 2

| $\Delta$ [%] | 2a [$\mu$m] | $\Delta$ neff (LP21-LP02) | $\Delta$ neff (LP31-LP12) |
|---|---|---|---|
| 0.8 | 30 | 0.0E+00 | -1.0E-05 |
| 0.9 | 28 | 0.0E+00 | -2.0E-05 |
| 1.0 | 26 | -1.0E-05 | -2.0E-05 |
| 1.1 | 24 | -1.0E-05 | -3.0E-05 |
| 1.2 | 23 | 0.0E+00 | -4.0E-05 |
| 2.0 | 15 | -4.0E-05 | -2.6E-04 |

Hereafter, characteristics of an optical fiber produced in accordance with the Embodiment 1 will be explained. An outer diameter of a cladding portion, made of pure silica glass, of the produced optical fiber was 125 $\mu$m, and an outer diameter of coating was 250 $\mu$m. Table 6 shows parameters obtained by measuring the refractive index distribution profiles of the produced optical fiber at wavelength of 1550 nm and then approximating the measured profiles with $\alpha$-shaped refractive index profile. The approximation was conducted with a method of setting each parameter for $\Delta$, 2a, and $\alpha$ so that a root-mean-square (RMS) for a difference relative to an approximated curve of $\alpha$-shaped (curve indicated by the mathematical expression (1)) in each radial directional position of an area of a core portion of the measured refractive index distribution profile (area of which relative refractive index difference $\Delta$ relative to the cladding portion becomes positive value) becomes minimum. As described above, the present invention is applicable to not so exact $\alpha$-shaped refractive index profile, which is as long as a refractive index distribution profile capable of being approximated by the $\alpha$-shaped refractive index profile. For a value of RMS herein, it is preferable that RMS be equal to or smaller than 0.08.

(TABLE 6)

| $\Delta$ [%] | $\alpha$ | 2a[$\mu$m] | V | N |
|---|---|---|---|---|
| 1.21 | 4.6 | 17.0 | 7.838 | 21.41 |

FIG. 10 is a view showing a refractive index distribution profile in a case of approximating the refractive index distribution profile of the produced optical fiber with the parameters shown in Table 6. In FIG. 10, a horizontal axis indicates radius and a vertical axis indicates relative refractive index. In a case of approximating with the parameters shown in Table 6, RMS was 0.05.

Next, optical characteristics of the optical fiber at wavelength of 1550 nm were subjected to simulation calculation by using the measured refractive index distribution profile. Table 7 is a table showing the calculated optical characteristics. In Table 7, "Aeff" indicates effective core area and "MFD" indicates mode-field diameter. Mode-field diameter is defined with diameter at a position which is a mean square of the field distribution. In addition, "$\Delta$neff" indicates an effective refractive index difference with reference to its preceding propagation mode. For example, a value 1.0E-3 ($1.0 \times 10^{-3}$) described in the line of LP12 mode indicates an effective refractive index difference between LP31 and LP12. In addition, differential group delay indicates time lag with reference to the LP01 mode. As shown in Table 7, 10 modes from the LP01 mode to the LP12 mode are small in confinement losses, and thus exist as propagation modes.

On the other hand, the LP03 mode as the 11th mode with reference to the LP01 mode is considered to be a leaky mode by which light does not propagate stably since its confinement loss is extremely great. That is, it was confirmed that the number of propagation modes of the produced optical fiber is 10, any of $\Delta$neff is equal to or greater than $3.0 \times 10^{-4}$, and the optical fiber is subjected to a little intermodal interference.

(TABLE 7)

| MODE | NUMBER OF MODE | neff | $\Delta$ neff | Aeff | MFD | CONFINEMENT LOSS | DIFFERENTIAL GROUP DELAY |
|------|------|------|------|------|------|------|------|
| | - | - | - | $\mu m^2$ | $\mu m$ | dB/km | ps |
| LP01 | 1 | 1.45935 | - | 84.0 | 10.1 | 1.2E-25 | - |
| LP11 | 2 | 1.45611 | 3.2E-3 | 138.5 | 13.4 | 6.1E-24 | 3859 |
| LP21 | 2 | 1.45240 | 3.7E-3 | 161.7 | 15.6 | 7.6E-23 | 8494 |
| LP02 | 1 | 1.45182 | 0.3E-3 | 104.3 | 14.9 | 1.3E-20 | 9443 |
| LP31 | 2 | 1.44823 | 3.6E-3 | 187.0 | 17.6 | 1.7E-14 | 11753 |
| LP12 | 2 | 1.44724 | 1.0E-3 | 206.3 | 18.4 | 8.5E-11 | 5258 |
| LP03 | 1 | 1.44442 | 2.8E-3 | 2159.6 | 59.3 | 3.3E+04 | -47480 |

Meanwhile, the LP03 mode shown in Table 7 as the 11th mode with reference to the LP01 mode overlaps the LP01 mode and the LP02 mode to a large degree in field distribution, and the LP41 mode as the twelfth and the thirteenth modes overlaps the LP21 mode and the LP31 mode to a large degree in field distribution. As described above, since the overlapping, in field distribution, of the equal to or greater than the eleventh LP mode with reference to the LP01 mode increases drastically, degree of difficulty increases in multiplexing and demultiplexing of mode. In this regard, it is preferable that the number of propagation mode be equal to or smaller than 10.

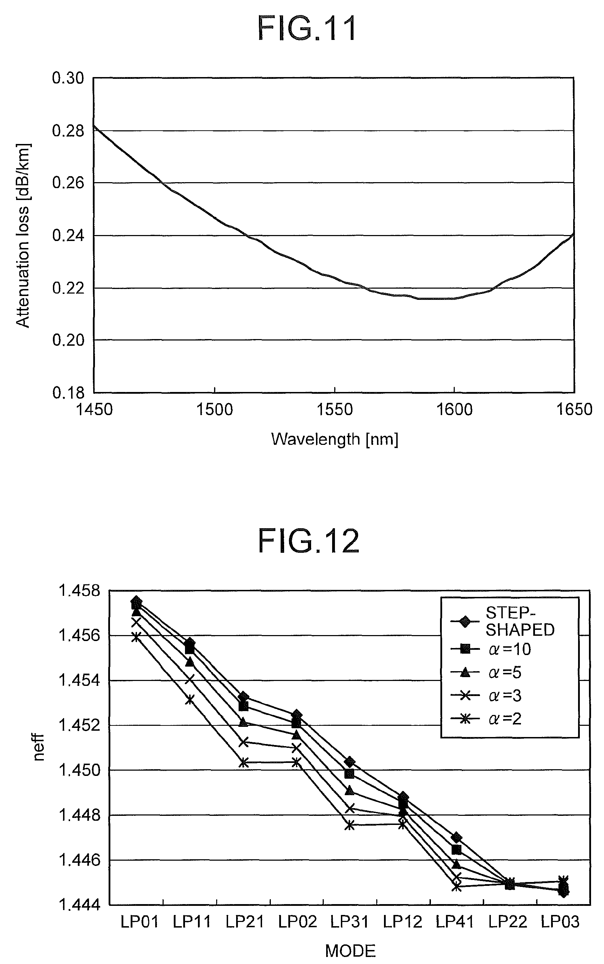

Then, all of the ten propagation modes of the produced optical fiber are excited and transmission loss spectrum was measured. FIG. 11 is a view showing a transmission loss spectrum of the produced optical fiber. As shown in FIG. 11, even in a case of exciting all the propagation modes, a value of the transmission loss was low and was equal to or lower than 0.23dB/km at a wavelength of 1550 nm.

A reason for that it is preferable that the number of propagation mode be equal to or smaller than 10 will be explained more details with reference to cases in which the number of propagation mode is 12.

As described above, FIGS 4 and 5 show results of calculating effective refractive index (neff) of each propagation mode, and intermode effective refractive index difference ($\Delta$neff) in a combination of adjacent propagation modes when the relative refractive index difference $\Delta$ is set at 1.0% and the core diameter 2a is adjusted so that the number N of propagation modes are identical in the optical fiber of the Comparison Example 1 (step-shaped), the optical fibers of the Examples 1, 2, and 3 ($\alpha$ is 10, 5, and 3 respectively), and the optical fiber of the Comparison Example 2 ($\alpha$ is 2). As the number N of propagation mode, N=19.68, which is a number of propagation mode achieving 10-mode propagation in the example of step-shape, is referred to. The highest order of step-shaped propagation mode is the LP12 mode. Hereafter a design of an optical fiber in which the number of propagation modes becomes 10 as shown in FIGS. 4 and 5 is called 10-mode design.

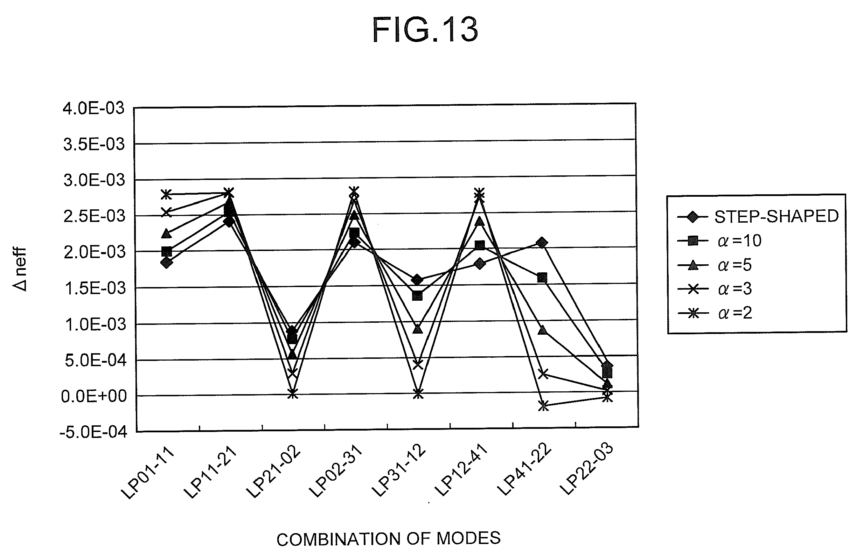

FIGS. 12 and 13 show results of calculating for a case in which the number of step-shaped propagation mode becomes 12 (number N of propagation mode=28.34) with a similar approach. That is, FIGS. 12 and 13 show results of calculating effective refractive index (neff) of each propagation mode, and intermode effective refractive index difference ($\Delta$neff) in a combination of adjacent propagation modes when the relative refractive index difference $\Delta$ is set at 1.0% and the core diameter 2a is adjusted so that the number N of propagation modes are identical in the step-shaped optical fibers in which $\alpha$ are 10, 5, 3, and 2. Although herein results of modes (LP22 mode and LP03 mode) higher than the LP41 mode as the twelfth mode in the step shape are shown in the drawings, since effective refractive indices of the LP22 mode and the LP03 mode are close to a refractive index of the cladding portion, the LP22 mode and the LP03 mode do not propagate actually and become leaky modes. Table 8 shows results of calculating bending loss of each propagation mode as a base for determining a leaky mode. As a regulation of bending loss required for propagation mode, for example, there is bending loss value regulated in ITU-T G.656 (equal to or smaller than 0.5 dB/100 turns at a bending radius 30 mm). Since a propagation loss in a propagation mode exceeding this regulation in bending loss is large, such propagation mode may be considered to be leaky mode. As shown in Table 8, since the LP22 mode and the LP03 mode in the step-shaped example exceed 0.5 dB/100 turns in bending loss to a large degree, the highest order of the step-shaped propagation mode is the LP41 mode. That is, a substantial propagation mode is 12. Hereafter a design of an optical fiber in which the number of propagation modes becomes 12 as shown in FIGS. 12 and 13 is called 12-mode design.

(TABLE 8)

| | BENDING LOSS@R=30 mm, 1550 nm [dB/100 turn] | | | | | | | | |
|---|---|---|---|---|---|---|---|---|---|
| | LP01 | LP11 | LP21 | LP02 | LP31 | LP12 | LP41 | LP22 | LP03 |
| STEP-SHAPED | EXTREMELY SMALL | EXTREMELY SMALL | EXTREMELY SMALL | EXTREMELY SMALL | EXTREMELY SMALL | EXTREMELY SMALL | 4.7E-11 | ∗1.8E+02 | ∗5.2E+03 |
| $\alpha$ =10 | EXTREMELY SMALL | EXTREMELY SMALL | EXTREMELY SMALL | EXTREMELY SMALL | EXTREMELY SMALL | EXTREMELY SMALL | 4.6E-09 | ∗1.8E+02 | ∗4.4E+03 |
| $\alpha$ =5 | EXTREMELY SMALL | EXTREMELY SMALL | EXTREMELY SMALL | EXTREMELY SMALL | EXTREMELY SMALL | EXTREMELY SMALL | 7.5E-06 | ∗4,3E+02 | ∗9.8E+02 |
| $\alpha$ =3 | EXTREMELY SMALL | EXTREMELY SMALL | EXTREMELY SMALL | EXTREMELY SMALL | EXTREMELY SMALL | 2.3E-12 | ∗5.5E-01 | ∗9.7E+02 | ∗2.0E+02 |
| $\alpha$ =2 | EXTREMELY SMALL | EXTREMELY SMALL | EXTREMELY SMALL | EXTREMELY SMALL | EXTREMELY SMALL | 4.4E-11 | ∗2.5E+02 | ∗7.6E+02 | ∗3.2E+02 |
| ∗: LEAKING MODE | | | | | | | | | |

Two facts are found by comparing the results in the FIGS. 4 and 5 with the results in the FIGS. 12 and 13. One of the facts relates to a difference between act of the LP12 mode as the highest order at the 10-mode design and act of the LP41 mode as the highest order at the 12-mode design from comparison of FIG. 4 with FIG. 12. In the case of the 10-mode design (FIG. 4), the LP12 mode has an approximately constant effective refractive index in any case of the step-shape and $\alpha$-shaped distribution. By contrast, in the case of the 12-mode design (FIG. 12), the effective refractive index of the LP41 varies to a large degree in accordance with a refractive index distribution profile, and specifically, the effective refractive index of the LP41 decreases along with decrease in $\alpha$. Moreover, as shown in FIG. 13, it is found that an effective refractive index difference between the LP41 mode and a higher order mode (leaky mode) tends to decrease. This means, in the 12-mode design, not only that a propagation state of the twelfth propagation mode cannot be maintained along with decrease in $\alpha$ but also that a mode-coupling with the leaky mode tends to occur easily. Therefore, as described above, in order to obtain an effect of desirable productivity by adapting $\alpha$-shaped refractive index profile in which the value of $\alpha$ is equal to or greater 3 and equal to or smaller than 10, the 10-mode propagation is preferable to the 12-mode propagation.

An act of effective refractive index at each propagation mode when an effective refractive index of the highest propagation mode (LP12 mode or LP41 mode) is fixed at a constant value was examined. In the previously described examination using the results shown in FIGS. 4 and 5 and the results shown in FIGS. 12 and 13, comparison was conducted when the value of the number N of propagation mode was fixed at a constant value. By contrast, an advantage of selecting the 10-mode propagation becomes easier to understand by conducting the comparison in a state of fixing the effective refractive index of the highest propagation mode at a constant value.

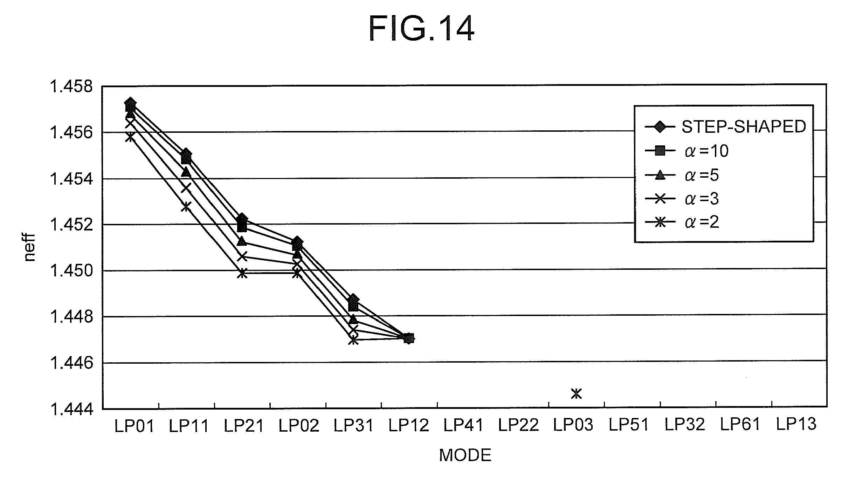

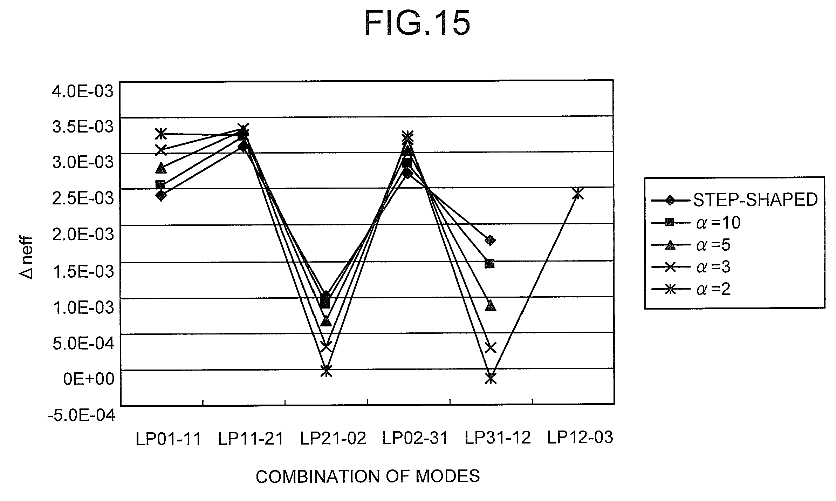

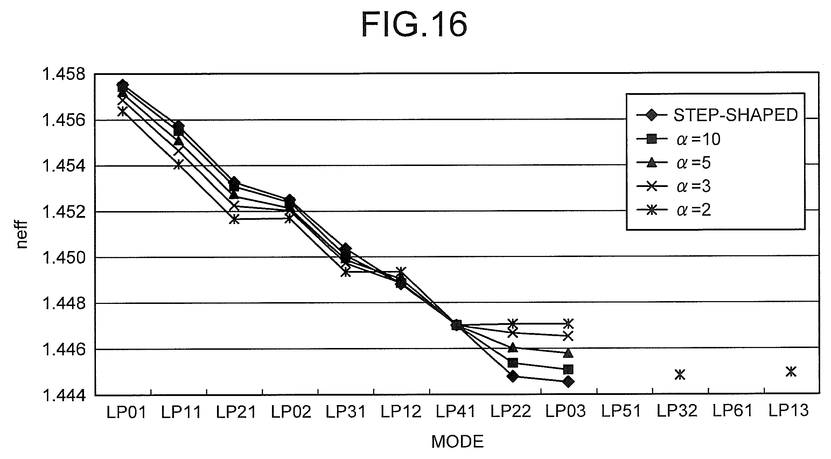

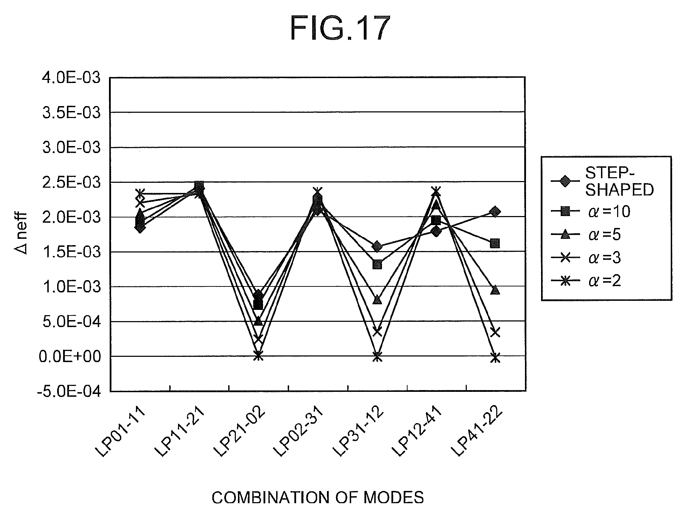

FIGS. 14 and 15 (10-mode design) and FIGS. 16 and 17 (12-mode design) show results of calculating an effective refractive index of each propagation mode and each intermode effective refractive index difference when the relative refractive index difference $\Delta$ is set at 1.0% and the core diameter 2a is adjusted so that effective refractive indices of the LP12 mode in the 10-mode design and the LP41 mode in the 12-mode design become 1.447 in the step-shaped optical fibers and the optical fibers in which $\alpha$ are 10, 5, 3, and 2. From the comparison of the effective refractive indices between the 10-mode design and the 12-mode design (comparison between FIG. 14 and FIG. 16), it is found that acts of the LP12 mode in which the effective refractive index is fixed and a mode next to, and higher than, the LP41 mode differ to a large degree. That is, in a case of the 10-mode design (FIG. 14), a higher-order mode next to the LP12 mode does not exist in any cases of step-shaped or $\alpha$-shaped distribution (LP41 mode, LP22 mode), otherwise the effective refractive index of the higher-order mode which if exist is sufficiently small (LP03 mode). As shown in FIG. 15, an effective refractive index difference between the LP12 mode and the higher-order mode (LP03 mode) existing next to the LP12 mode is great. If the effective refractive index difference between the highest order of the propagation mode and the mode of the next highest order is great, it is easy to take greater design or production margin for $\alpha$ and $\Delta$ for achieving desirable number of propagation modes. By contrast, in a case of the 12-mode design (FIG. 16), the effective refractive indices of higher-order modes next to the LP41 mode (LP22 mode and LP03 mode) increase along with decrease in $\alpha$. The LP22 mode and the LP03 mode tend to become propagation modes along with their bending losses becoming small as shown in Table 9. From that effect, it is found that, as shown in FIG. 17, the effective refractive index difference between the LP41 mode and the next higher-order mode (LP22 mode) in the 12-mode design decreases along with decrease in $\alpha$. From this point, for exerting the effect of obtaining better productivity by adapting the $\alpha$-shaped refractive index profile in which a value of $\alpha$ is equal to or greater than 3 and equal to or smaller than 10, the 10-mode propagation is more preferable to the 12-mode propagation.

(TABLE 9)

| | BENDING LOSS@R=30 mm, 1550 nm [dB/100turn] | | | | | | | | | | | | |
|---|---|---|---|---|---|---|---|---|---|---|---|---|---|
| | LP01 | LP11 | LP21 | LP02 | LP31 | LP12 | LP41 | LP22 | LP03 | LP51 | LP32 | LP61 | LP13 |
| STEP-SHAPED | EXTREMELY SMALL | EXTREMELY SMALL | EXTREMELY SMALL | EXTREMELY SMALL | EXTREMELY SMALL | EXTREMELY SMALL | 4.7E-11 | *1.8E+02 | *5.2E-03 | - | - | - | - |
| $\alpha$ =10 | EXTREMELY SMALL | EXTREMELY SMALL | EXTREMELY SMALL | EXTREMELY SMALL | EXTREMELY SMALL | EXTREMELY SMALL | 7.8E-11 | *1.9E+00 | *4.3E+02 | - | - | - | - |
| $\alpha$ =5 | EXTREMELY SMALL | EXTREMELY SMALL | EXTREMELY SMALL | EXTREMELY SMALL | EXTREMELY SMALL | EXTREMELY SMALL | 1.3E-10 | 2.5E-05 | 2.8E-03 | - | - | - | - |
| $\alpha$ =3 | EXTREMELY SMALL | EXTREMELY SMALL | EXTREMELY SMALL | EXTREMELY SMALL | EXTREMELY SMALL | EXTREMELY SMALL | 2.9E-10 | 7,8E-08 | 6.3E-07 | - | - | - | - |
| $\alpha$ =2 | EXTREMELY SMALL | EXTREMELY SMALL | EXTREMELY SMALL | EXTREMELY SMALL | EXTREMELY SMALL | EXTREMELY SMALL | 9.5E-10 | 8.6E-09 | 1.7E-08 | - | *3.8E+02 | - | *2.4E+03 |
| *: LEAKING MODE | | | | | | | | | | | | | |

(Embodiment 2)

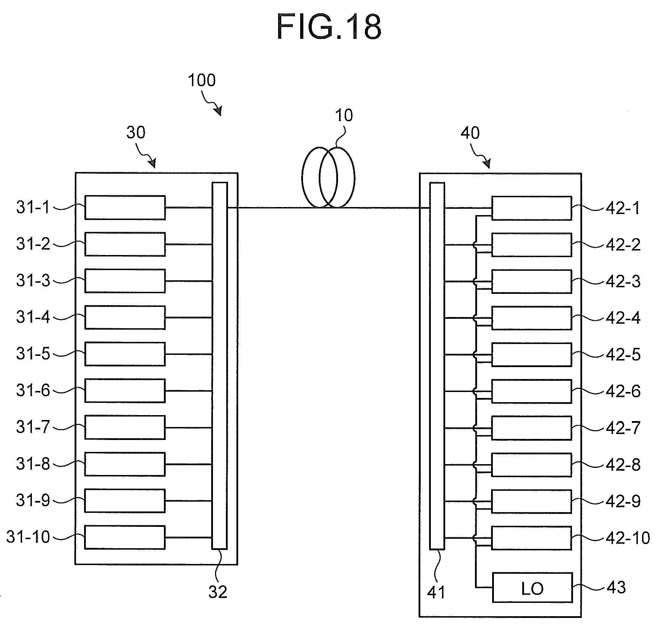

FIG. 18 is a schematic diagram of an optical transmission system according to the embodiment 2 of the present invention. As shown in FIG. 18, an optical transmission system 100 includes a transmitting device 30, a receiving device 40, and the optical fiber 10, as an optical transmission path connecting the transmitting device 30 to the receiving device 40, according to Embodiment 1.

The transmitting device 30 outputs signal lights being subjected to Space Division Multiplexing and being coupled to ten propagation modes of the optical fiber 10. A wavelength of the signal lights is, for example, 1550 nm. The transmitting device 30 as such has a configuration described in, for example, Non-Patent Literatures 1 and 2 or the like. Specifically, for example, the transmitting device 30 includes ten transmitting units 31-1 to 31-10 and a mode division multiplexing unit 32. The transmitting units 31-1 to 31-10 output, with the LP01 mode, signal lights modulated by a predetermined modulation method such as Quadrature Amplitude Modulation (QAM) or the like and subjected to polarization multiplexing. The mode division multiplexing unit 32 is connected to the transmitting units 31-1 to 31-10. The mode division multiplexing unit 32 convers, with a wavelength plate or the like, nine signal lights, that are output from the transmitting units other than the transmitting unit 31-1 of the transmitting units 31-1 to 31-10 to signal lights of two LP11 modes, two LP21 modes, one LP02 mode, two LP31 modes, and two LP12 modes respectively. The mode division multiplexing unit 32 multiplexes the signal light of the LP01 mode outputted from the transmitting unit 31-1 and not subjected to mode conversion and the signal lights being subjected to the mode conversion and having the nine modes with a spatial optical system or the like for Space Division Multiplexing.

In the mode division multiplexing unit 32, for example, the signal lights outputted from the transmitting units 31-2 and 31-3 are subjected to mode conversion respectively to two LP11 modes. The signal lights outputted from the transmitting units 31-4 and 31-5 are subjected to mode conversion respectively to two LP21 modes. The signal light outputted from the transmitting unit 31-6 is subjected to mode conversion to one LP02 mode. The signal lights outputted from the transmitting units 31-7 and 31-8 are subjected to mode conversion to two LP31 modes respectively. The signal lights outputted from the transmitting units 31-9 and 31-10 are subjected to mode conversion respectively to two LP12 modes.

The signal lights subjected to Space Division Multiplexing with 10 modes and outputted by the transmitting device 30 are inputted to the optical fiber 10, and then the optical fiber 10 transmits the signal lights of each mode with each of the ten propagation modes of the optical fiber 10. Since the optical fiber 10 in this state is subjected to little intermodal interference, intermodal interference of the signal lights being transmitted is restrained.

The signal light being transmitted through the optical fiber 10 and being subjected to Space Division Multiplexing is inputted to the receiving device 40. The receiving device 40 demultiplexes the signal lights to each propagation mode, conducts MIMO processing to each demultiplexed signal light for demodulation. The receiving device 40 as such has a configuration described in, for example, Non-Patent Literatures 1 and 2 or the like. Specifically, for example, the receiving device 40 includes a mode multiplex division unit 41, coherent receiving units 42-1 to 42-10, and a local oscillation light source 43. The mode multiplex division unit 41 demultiplexes the signal lights subjected to Space Division Multiplexing to each mode of signal light by a spatial optical system or the like. The coherent receiving units 42-1 to 42-10 are configured by a coherent mixer and a balanced photo-diode or the like being connected to the mode multiplex division unit 41 and receiving the demultiplexed ten signal lights respectively. The local oscillation light source 43 is connected to the coherent receiving units 42-1 to 41-10 and supplies local oscillation light.

The coherent receiving unit 42-1 receives the LP01 mode of signal light, and the coherent receiving units 42-2 to 42-10 receive signal lights of not the LP01 mode respectively. Specifically, the coherent receiving units 42-2 and 42-3 receive the LP11 mode of signal lights respectively. The coherent receiving units 42-4 and 42-5 receive the LP21 mode of signal lights respectively. The coherent receiving unit 42-6 receives the LP02 mode of signal light. The coherent receiving units 42-7 and 42-8 receive the LP31 mode of signal lights respectively. The coherent receiving units 42-9 and 42-10 receive the LP12 mode of signal lights respectively. However, since two degenerated modes exist in the LP modes other than the LP01 mode and the LP02 mode, the coherent receiving units 42-2 to 42-10 include a MIMO processing unit configured by an A/D converter and a digital signal processor (DSP) or the like for subjecting the degenerated mode (for example, in a case of the coherent receiving unit 42-2, four modes, i.e., two LP11 modes and two polarization modes) of signal lights to the MIMO processing.

Herein in a case of greater intermodal interference in the optical fiber as an optical transmission path, $20 \times 20$ MIMO processings at maximum must be conducted at the MIMO processing unit in a case in which, for example, ten LP modes (and two polarization modes at each of the LP modes) interfere with each other. By contrast, since the optical fiber 10 subjected to little intermodal interference is used as an optical transmission path in this optical transmission system 100, a MIMO processing may be conducted for a case of fewer combination of modes, for example, conducting 4x4 MIMO processings required for processing the above described four modes is preferable. Therefore, load in the MIMO processing unit decreases to a large degree, faster processing, lower cost, and reduced power consumption or the like can be achieved in the MIMO processing unit.

In the optical transmission system 100 shown in FIG. 12, an optical repeater may be disposed midway along the optical fiber 10.

Although a case of 1550 nm of wavelength input to the optical fiber is shown as described above, the present invention does not limit the wavelength being inputted.

For example, in the optical fiber according to the present invention, at least the diameter of the core portion and the relative refractive index difference of the core portion relative to the cladding portion are set so that equal to or greater than 6, or equal to or greater than 10, of propagation modes exist at a wavelength of light being input in case in which the light being input is at another wavelength included in a bandwidth called C-band (1530 nm to 1565 nm) or L-band (1565 nm to 1610 nm), for example.

The present invention is not limited to these embodiments. The present invention includes a configuration appropriately combining the above-described elements. Further effects or modification examples can be derived by an ordinary skilled person in the art easily. Therefore, further wide aspects of the present invention are not limited to the specific, detailed, and various modifications may be made.

Industrial Applicability

As described above, the optical fiber and the optical transmission system according to the present invention are suitable mainly for use in optical communication.

Reference Signs List

> 10 optical fiber
> 11 core portion
> 12 cladding portion
> 30 transmitting device
> 301-1 to 31-10 transmitting unit
> 32 mode division multiplexing unit
> 40 receiving unit
> 41 mode multiplex division unit
> 42-1 to 42-10 coherent receiving unit
> 43 local oscillation light source
> 100 optical transmission system
> L1 to L3 line

**Claims**

1. An optical fiber comprising:

   a core portion; and
   a cladding portion being formed at an outer periphery of the core portion and having a refractive index lower than a maximum refractive index of the core portion, wherein
   the core portion has $\alpha$-shaped refractive index profile in which a value of $\alpha$ is equal to or greater than 3 and equal to or smaller than 10, and
   at least a diameter of the core portion and a relative refractive-index difference of the core portion relative to the cladding portion are set so that equal to or greater than 6 propagation modes exist at a wavelength of a light inputted.

2. The optical fiber according to claim 1, wherein at least the diameter and the relative refractive-index difference of the core portion are set so that equal to or smaller than 10 propagation modes exist at the wavelength.

3. The optical fiber according to claim 1 or 2, wherein at least the diameter and the relative refractive-index difference of the core portion are set so that 10 propagation modes including an LP21 mode, an LP02 mode, an LP31 mode, and an LP12 mode exist, and
   an effective refractive index difference between the LP21 mode and the LP02 mode and an effective refractive index difference between the LP31 and the LP12 mode are equal to or greater than $2 \times 10^{-4}$ at the wavelength.

**4.** The optical fiber according to claim 3, wherein the relative refractive-index difference is equal to or greater than 0.5% and equal to or smaller than 2.0%, and the diameter of the core portion is equal to or greater than 11 $\mu$m and equal to or smaller than 26 $\mu$m.

**5.** The optical fiber according to claim 1 or 2, wherein the core portion has the $\alpha$-shaped the refractive index profile in which the value of $\alpha$ is equal to or greater than 5.

**6.** The optical fiber according to claim 5, wherein at least the diameter and the relative refractive-index difference of the core portion are set so that 10 propagation modes including an LP21 mode, an LP02 mode, an LP31 mode, and an LP12 mode exist, and
an effective refractive index difference between the LP21 mode and the LP02 mode and an effective refractive index difference between the LP31 and the LP12 mode are equal to or greater than $4 \times 10^{-4}$ at the wavelength.

**7.** An optical transmission system comprising the optical fiber of any one of claims 1 to 6.

# TABLE.1

(TABLE 1)

| LP MODE | LP01 | LP11 | LP21 | LP02 | LP31 | LP12 |
|---|---|---|---|---|---|---|
| EFFECTIVE REFRACTIVE INDEX | 1.45716 | 1.45475 | 1.45165 | 1.45064 | 1.44794 | 1.44616 |

# TABLE.2

(TABLE 2)

| COMBINATION OF MODES | LP01-LP11 | LP11-LP21 | LP21-LP02 | LP02-LP31 | LP31-LP12 |
|---|---|---|---|---|---|
| EFFECTIVE REFRACTIVE INDEX DIFFERENCE | 2.4E-03 | 3.1E-03 | 1.0E-03 | 2.7E-03 | 1.8E-03 |

# TABLE.3

(TABLE 3)

| $\Delta$ [%] | $\alpha$ | 2a [$\mu$m] | V | N |
|---|---|---|---|---|
| 1.0 | STEP | 15.0 | 6.273 | 19.68 |
| 1.0 | 10 | 16.4 | 6.872 | 19.68 |
| 1.0 | 5 | 17.8 | 7.423 | 19.68 |
| 1.0 | 3 | 19.4 | 8.099 | 19.68 |
| 1.0 | 2 | 21.2 | 8.872 | 19.68 |

# TABLE.4

(TABLE 4A)                                                                    STEP-SHAPED

|  | $\Delta$ [%] | 2a [$\mu$m] | $\Delta$ neff (LP21-LP02) | $\Delta$ neff (LP31-LP12) |
|---|---|---|---|---|
| MAX. | 2.0 | 24 | 2.2E-3 | 3.5E-3 |
| MIN. | 0.5 | 10 | 4.2E-4 | 8.2E-4 |

(TABLE 4B)                                                                              $\alpha$ : 10

|  | $\Delta$ [%] | 2a [$\mu$m] | $\Delta$ neff (LP21-LP02) | $\Delta$ neff (LP31-LP12) |
|---|---|---|---|---|
| MAX. | 2.0 | 26 | 2.0E-3 | 2.8E-3 |
| MIN. | 0.5 | 11 | 4.0E-4 | 7.0E-3 |

(TABLE 4C)                                                                               $\alpha$ : 5

|  | $\Delta$ [%] | 2a [$\mu$m] | $\Delta$ neff (LP21-LP02) | $\Delta$ neff (LP31-LP12) |
|---|---|---|---|---|
| MAX. | 2.0 | 23 | 1.4E-3 | 1.6E-3 |
| MIN. | 0.8 | 12 | 4.6E-4 | 7.0E-4 |

(TABLE 4D)                                                                               $\alpha$ : 3

|  | $\Delta$ [%] | 2a [$\mu$m] | $\Delta$ neff (LP21-LP02) | $\Delta$ neff (LP31-LP12) |
|---|---|---|---|---|
| MAX. | 2.0 | 26 | 6.3E-4 | 4.4E-4 |
| MIN. | 0.8 | 13 | 2.2E-4 | 2.5E-4 |

(TABLE 4E)                                                                               $\alpha$ : 2

|  | $\Delta$ [%] | 2a [$\mu$m] | $\Delta$ neff (LP21-LP02) | $\Delta$ neff (LP31-LP12) |
|---|---|---|---|---|
| MAX. | 2.0 | 30 | 0.0E+0 | -1.0E-5 |
| MIN. | 0.8 | 15 | -4.0E-5 | -2.6E-4 |

# TABLE.5A

(TABLE 5A)                                                                STEP-SHAPED

| Δ [%] | 2a [μm] | Δ neff (LP21-LP02) | Δ neff (LP31-LP12) |
|---|---|---|---|
| 0.5 | 24 | 4.2E-04 | 8.2E-04 |
| 0.8 | 18 | 7.3E-04 | 1.4E-03 |
| 0.9 | 17 | 8.2E-04 | 1.5E-03 |
| 1.0 | 16 | 9.2E-04 | 1.7E-03 |
| 1.1 | 15 | 1.0E-03 | 1.9E-03 |
| 1.2 | 14 | 1.2E-03 | 2.1E-03 |
| 2.0 | 10 | 2.2E-03 | 3.5E-03 |

(TABLE 5B)                                                                $\alpha : 10$

| Δ [%] | 2a [μm] | Δ neff (LP21-LP02) | Δ neff (LP31-LP12) |
|---|---|---|---|
| 0.5 | 26 | 4.0E-04 | 7.0E-04 |
| 0.8 | 21 | 6.2E-04 | 1.1E-03 |
| 0.9 | 19 | 7.3E-04 | 1.3E-03 |
| 1.0 | 18 | 8.2E-04 | 1.4E-03 |
| 1.1 | 17 | 9.1E-04 | 1.6E-03 |
| 1.2 | 16 | 1.0E-03 | 1.7E-03 |
| 2.0 | 11 | 2.0E-03 | 2.8E-03 |

(TABLE 5C)                                                                $\alpha : 5$

| Δ [%] | 2a[μm] | Δ neff (LP21-LP02) | Δ neff (LP31-LP12) |
|---|---|---|---|
| 0.8 | 23 | 4.6E-04 | 7.0E-04 |
| 0.9 | 22 | 5.0E-04 | 7.9E-04 |
| 1.0 | 20 | 5.8E-04 | 8.9E-04 |
| 1.1 | 19 | 6.5E-04 | 9.9E-04 |
| 1.2 | 18 | 7.2E-04 | 1.1E-03 |
| 2.0 | 12 | 1.4E-03 | 1.6E-03 |

# TABLE.5B

(TABLE 5D)                                                                        $\alpha : 3$

| Δ [%] | 2a [$\mu$m] | Δneff (LP21-LP02) | Δneff (LP31-LP12) |
|---|---|---|---|
| 0.8 | 26 | 2.2E-04 | 2.9E-04 |
| 0.9 | 24 | 2.5E-04 | 3.3E-04 |
| 1.0 | 23 | 2.7E-04 | 3.6E-04 |
| 1.1 | 22 | 3.0E-04 | 4.0E-04 |
| 1.2 | 21 | 3.2E-04 | 4.4E-04 |
| 2.0 | 13 | 6.3E-04 | 4.1E-04 |

(TABLE 5E)                                                                        $\alpha : 2$

| Δ [%] | 2a [$\mu$m] | Δneff (LP21-LP02) | Δneff (LP31-LP12) |
|---|---|---|---|
| 0.8 | 30 | 0.0E+00 | -1.0E-05 |
| 0.9 | 28 | 0.0E+00 | -2.0E-05 |
| 1.0 | 26 | -1.0E-05 | -2.0E-05 |
| 1.1 | 24 | -1.0E-05 | -3.0E-05 |
| 1.2 | 23 | 0.0E+00 | -4.0E-05 |
| 2.0 | 15 | -4.0E-05 | -2.6E-04 |

# TABLE.6

(TABLE 6)

| Δ [%] | $\alpha$ | 2a[$\mu$m] | V | N |
|---|---|---|---|---|
| 1.21 | 4.6 | 17.0 | 7.838 | 21.41 |

# TABLE.7

(TABLE 7)

| MODE | NUMBER OF MODE | neff | Δneff | Aeff | MFD | CONFINE-MENT LOSS | DIFFEREN-TIAL GROUP DELAY |
|---|---|---|---|---|---|---|---|
| | - | - | - | $\mu$m$^2$ | $\mu$m | dB/km | ps |
| LP01 | 1 | 1.45935 | - | 84.0 | 10.1 | 1.2E-25 | - |
| LP11 | 2 | 1.45611 | 3.2E-3 | 138.5 | 13.4 | 6.1E-24 | 3859 |
| LP21 | 2 | 1.45240 | 3.7E-3 | 161.7 | 15.6 | 7.6E-23 | 8494 |
| LP02 | 1 | 1.45182 | 0.3E-3 | 104.3 | 14.9 | 1.3E-20 | 9443 |
| LP31 | 2 | 1.44823 | 3.6E-3 | 187.0 | 17.6 | 1.7E-14 | 11753 |
| LP12 | 2 | 1.44724 | 1.0E-3 | 206.3 | 18.4 | 8.5E-11 | 5258 |
| LP03 | 1 | 1.44442 | 2.8E-3 | 2159.6 | 59.3 | 3.3E+04 | -47480 |

# TABLE.8

(TABLE 8)

| | LP01 | LP11 | LP21 | LP02 | LP31 | LP12 | LP41 | LP22 | LP03 |
|---|---|---|---|---|---|---|---|---|---|
| BENDING LOSS@R=30 mm, 1550 nm [dB/100turn] | | | | | | | | | |
| STEP-SHAPED | EXTREMELY SMALL | EXTREMELY SMALL | EXTREMELY SMALL | EXTREMELY SMALL | EXTREMELY SMALL | EXTREMELY SMALL | 4.7E-11 | *1.8E+02 | *5.2E+03 |
| $\alpha$=10 | EXTREMELY SMALL | EXTREMELY SMALL | EXTREMELY SMALL | EXTREMELY SMALL | EXTREMELY SMALL | EXTREMELY SMALL | 4.6E-09 | *1.8E+02 | *4.4E+03 |
| $\alpha$=5 | EXTREMELY SMALL | EXTREMELY SMALL | EXTREMELY SMALL | EXTREMELY SMALL | EXTREMELY SMALL | EXTREMELY SMALL | 7.5E-06 | *4.3E+02 | *9.8E+02 |
| $\alpha$=3 | EXTREMELY SMALL | EXTREMELY SMALL | EXTREMELY SMALL | EXTREMELY SMALL | EXTREMELY SMALL | 2.3E-12 | *5.5E-01 | *9.7E+02 | *2.0E+02 |
| $\alpha$=2 | EXTREMELY SMALL | EXTREMELY SMALL | EXTREMELY SMALL | EXTREMELY SMALL | EXTREMELY SMALL | 4.4E-11 | *2.5E+02 | *7.6E+02 | *3.2E+02 |

*: LEAKING MODE

# TABLE.9

(TABLE 9)

| BENDING LOSS@R=30 mm, 1550 nm [dB/100turn] | | | | | | | | | | | | | |
|---|---|---|---|---|---|---|---|---|---|---|---|---|---|
| | LP01 | LP11 | LP21 | LP02 | LP31 | LP12 | LP41 | LP22 | LP03 | LP51 | LP32 | LP61 | LP13 |
| STEP-SHAPED | EX-TREMELY SMALL | EX-TREMELY SMALL | EX-TREMELY SMALL | EX-TREMELY SMALL | EX-TREMELY SMALL | EX-TREMELY SMALL | 4.7E-11 | *1.8E+02 | *5.2E+03 | - | - | - | - |
| α=10 | EX-TREMELY SMALL | EX-TREMELY SMALL | EX-TREMELY SMALL | EX-TREMELY SMALL | EX-TREMELY SMALL | EX-TREMELY SMALL | 7.8E-11 | *1.9E+00 | *4.3E+02 | - | - | - | - |
| α=5 | EX-TREMELY SMALL | EX-TREMELY SMALL | EX-TREMELY SMALL | EX-TREMELY SMALL | EX-TREMELY SMALL | EX-TREMELY SMALL | 1.3E-10 | 2.5E-05 | 2.8E-03 | - | - | - | - |
| α=3 | EX-TREMELY SMALL | EX-TREMELY SMALL | EX-TREMELY SMALL | EX-TREMELY SMALL | EX-TREMELY SMALL | EX-TREMELY SMALL | 2.9E-10 | 7.8E-08 | 6.3E-07 | - | - | - | - |
| α=2 | EX-TREMELY SMALL | EX-TREMELY SMALL | EX-TREMELY SMALL | EX-TREMELY SMALL | EX-TREMELY SMALL | EX-TREMELY SMALL | 9.5E-10 | 8.6E-09 | 1.7E-08 | - | *3.8E+02 | - | *2.4E+03 |

*: LEAKING MODE

# FIG.1

# FIG.2

LP01      LP11a      LP11b

LP21a      LP21b      LP02

LP31a      LP31b      LP12a      LP12b

# FIG.3

# FIG.4

# FIG.5

# FIG.6

## FIG.7

## FIG.8

## FIG.9

## FIG.10

# FIG.11

# FIG.12

# FIG.13

# FIG.14

EP 3 056 931 A1

# FIG.15

EP 3 056 931 A1

# FIG.16

# FIG.17

# FIG.18

## INTERNATIONAL SEARCH REPORT

| International application No. |
| --- |
| PCT/JP2014/077089 |

**A. CLASSIFICATION OF SUBJECT MATTER**
*G02B6/028*(2006.01)i

According to International Patent Classification (IPC) or to both national classification and IPC

**B. FIELDS SEARCHED**

Minimum documentation searched (classification system followed by classification symbols)
G02B6/02-6/10, 6/44

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2005-518564 A  (Corning Inc.),<br>23 June 2005 (23.06.2005),<br>claims 1, 14 to 16; paragraphs [0023], [0046];<br>fig. 14<br>& US 2003/0161597 A1     & WO 2003/073140 A1 | 1-2,5,7<br>3-4,6 |
| Y | WO 2000/042459 A1  (Sumitomo Electric<br>Industries, Ltd.),<br>20 July 2000 (20.07.2000),<br>1st example<br>& US 2002/0003926 A1     & EP 1191365 A1<br>& CN 1316062 A | 3-4,6 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    15 December, 2014 (15.12.14) | Date of mailing of the international search report<br>    22 December, 2014 (22.12.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/077089

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2012/124816 A1  (The Furukawa Electric Co., Ltd.),<br>20 September 2012 (20.09.2012),<br>paragraphs [0036], [0045]; fig. 9<br>& JP 5100921 B2        & US 2013/0251323 A1<br>& EP 2687883 A1 | 3-4,6 |
| A | JP 2009-288788 A  (OFS Fitel, LLC),<br>10 December 2009 (10.12.2009),<br>paragraph [0011]<br>& US 7565048 B1         & EP 2128669 A1<br>& CN 101592758 A        & KR 10-2009-0124990 A | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C.KOEBELE et al.** 40km Transmission of Five Mode Division Multiplexed Data Streams at 100Gb/s with low MIMO-DSP Complexity. *ECOC 2011, Th.13.C.3,* 2011

- **R.RYF et al.** Mode-Division Multiplexing Over 96 km of Few-Mode Fiber Using Coherent 6x6 MIMO Processing. *J. Lightwave Technol.,* 2012, vol. 30 (4), 521-531